# EUROPEAN PATENT APPLICATION

(11) **EP 4 116 838 A1**
(43) Date of publication of application: **11.01.2023**
(21) Application number: 22761040.9
(22) Date of filing: 29.03.2022
(51) Int. Cl.: G06F 16/2455

(54) **DATA QUERY METHOD AND APPARATUS, AND DEVICE AND STORAGE MEDIUM**

(30) Priority: 24.05.2021 CN 202110569913
(71) Applicant: KUYUN (SHANGHAI) INFORMATION TECHNOLOGY CO., LTD., Shanghai 200120 (CN)
(72) Inventor: The designation of the inventor has not yet been filed
(74) Representative: Ipey
(86) International application number: PCT/CN2022/083616
(87) International publication number: WO 2022/247443

(57) **Abstract**

The present invention discloses a data query method, device and equipment and a storage medium. A data query method comprises the following steps: receiving an MDX query statement; acquiring related information of measurement and dimension in the MDX query statement; and performing query according to the related information of measurement and dimension to obtain a query result. According to the present invention, an MDX expression is computed by extracting the related information of measurement and dimension and utilizing a distributed computing framework, so that the data analysis efficiency is greatly improved.

## Description

### Technical Field

The present invention relates to the technical field of computers, and particularly relates to a data query method, device and equipment and a storage medium.

### Background Art

With the emergence of the big data era, the scale of data collected and analyzed by people is larger and larger, but there is a problem that how to analyze mass data and make a decision. An OLAP (Online Analysis Processing) system has become an indispensable component in big data analysis due to its excellent multi-dimensional analysis capability. MDX is the commonly used query language of the OLAP. Efficient analysis cannot be realized by the MDX language on the big data.

### Summary of the Present Invention

A main objective of the present invention is to provide a data query method, device and equipment and a storage medium to solve the above problems.

In order to achieve the above objective, in a first aspect, the present invention provides a data query method comprising:
receiving an MDX query statement;
acquiring related information of measurement and dimension in the MDX query statement; and
performing query according to the related information of measurement and dimension to obtain a query result.

In one embodiment, the steps of performing query according to the related information of measurement and dimension include:
determining a row dimension data range and a column dimension data range;
constructing a multi-dimensional data table according to the row dimension data range and the column dimension data range; and
for any coordinate node in the multi-dimensional data table,
querying and determining the measurement data of the node according to the row dimension and the column dimension of the coordinate node.

In one embodiment, the method further comprises the following steps: acquiring an operator of the MDX query statement;
for the coordinate node, determining an auxiliary dimension and/or an auxiliary measurement of the node according to the row dimension, the column dimension and the measurement expression of the coordinate node if the measurement of the coordinate node cannot be queried;
computing to obtain the measurement of the node according to the auxiliary dimension, and/or the auxiliary measurement and the operator.

In one embodiment, the steps of receiving the MDX query statement include: receiving the MDX query statement sent by a report tool;
performing format finishing on the query result; and sending the query result subjected to format finishing to the report tool.

In one embodiment, the step of performing query according to the related information of measurement and dimension to obtain the query result includes:
performing query from a distributed storage system according to the related information of measurement and dimension to obtain the query result;
multiple batches of mutually isolated data are stored in the distributed storage system; and a group of dimensions and measurements are stored in each batch of data.

In one embodiment, the steps of querying the auxiliary dimension and/or the auxiliary measurement of the node if the direct measurement of the node cannot be queried include: determining the auxiliary dimension and/or the auxiliary measurement to be used according to the measurement expression;
determining the batch of data of the auxiliary dimension and/or the auxiliary measurement according to the auxiliary dimension and/or the auxiliary measurement; and acquiring the auxiliary dimension and/or the auxiliary measurement from the batch of data.

In order to achieve the above objective, in a second aspect, the present invention provides a data query device comprising:
a receiving module used for receiving the MDX query statement;
an acquiring module used for acquiring related information of measurement and dimension in the MDX query statement; and
a query module used for performing query according to the related information of measurement and dimension to obtain the query result.

In one embodiment, the query module is further used for determining a row dimension data range and a column dimension data range;
constructing a multi-dimensional data table according to the row dimension data range and the column dimension data range; and
for any coordinate node in the multi-dimensional data table,
querying and determining the measurement data of the node according to the row dimension and the column dimension of the coordinate node.

In one embodiment, the query module is further used for acquiring the operator of the MDX query statement;
for the coordinate node, determining an auxiliary dimension and/or an auxiliary measurement of the node according to the row dimension, the column dimension and the measurement
expression of the coordinate node if the measurement of the coordinate node cannot be queried; and
computing to obtain the measurement of the node according to the auxiliary dimension, and/or the auxiliary measurement and the operator.

In one embodiment, the receiving module is further used for receiving the MDX query statement sent by the report tool;

The device further comprises a format finishing module used for performing format finishing on the query result, and sending the query result subjected to format finishing to the report tool.

In one embodiment, the query module is further used for performing query from a distributed storage system according to the related information of measurement and dimension to obtain the query result;
multiple batches of mutually isolated data are stored in the distributed storage system; and a group of dimensions and measurements are stored in each batch of data.

In one embodiment, the query module is further used for determining the auxiliary dimension and/or the auxiliary measurement to be used according to the measurement expression; determining the batch of data of the auxiliary dimension and/or the auxiliary measurement according to the information of the auxiliary dimension and/or the auxiliary measurement; acquiring the auxiliary dimension and/or the auxiliary measurement from the batch of data.

In order to achieve the above objective, in a third aspect, the present invention provides a kind of electronic equipment comprising at least one processor and at least one memory, wherein the memory is used for storing one or more program instructions; and the processor is used for running one or more program instructions and executing any of the above-mentioned methods.

In a fourth aspect, the present invention provides a computer readable storage medium comprising one or more program instructions, wherein the one or more program instructions are used for executing any of the above-mentioned methods.

According to the technical solution of the present invention, the MDX expression is computed by extracting measurement and dimension information in query and through a distributed computing framework, and thus the data query and analysis efficiency is improved. The technical solution can cope with various business analysis scenes with large data volumes and complex logics.

### Brief Description of the Drawings

The present invention can be further understood through the accompanying drawings, which constitute a part of the present invention, thereby making other features, objects and advantages of the present invention more apparent. The accompanying drawings and descriptions of the schematic embodiments of the present invention are used to explain the present invention, but do not cause an improper limitation to the present invention. In the FIGs.:
FIG. 1 is a flowchart of a data query method in an embodiment of the present invention;
FIG. 2 is a structural schematic diagram of a data query device in an embodiment of the present invention;
FIG. 3 is a structural schematic diagram of another data query device in an embodiment of the present invention; and
FIG. 4 is a structural schematic diagram of a kind of data query equipment in an embodiment of the present invention.

### Detailed Description of the Present Invention

In order to make those skilled in the art better understand the solutions of the present invention, the technical solutions in the embodiments of the present invention will be clearly and completely described below with reference to the accompanying drawings in the embodiments of the present invention. Obviously, the described embodiments are only some of the embodiments of the present invention, but not all of the embodiments. Based on the embodiments in the present invention, all other embodiments obtained by those of ordinary skill in the art without creative work shall fall within the protection scope of the present invention.

It should be noted that the terms "first", "second", and the like in the specification and claims of the present invention and the above drawings are used to distinguish similar objects, but are not necessarily used to describe a specific sequence or sequence. It is to be understood that the data so used are interchangeable under appropriate circumstances for the embodiments of the application described herein. In addition, the terms "comprising" and "having", and any variations thereof, are intended to cover non-exclusive inclusion, for example, a process, method, system, product or device comprising a series of steps or units is not necessarily limited to those steps or units expressly listed, but may include other steps or units not expressly listed or inherent to the process, method, product or device.

It should be noted that the embodiments in the present invention and the features of the embodiments may be combined with each other in the case of no conflict. The present invention will be described in detail below with reference to the accompanying drawings and in conjunction with the embodiments.

First, the technical terms in this present invention are shown as follows:
OLAP: Online Analysis Processing, refers to a technology through which an analyst can quickly observe data from multiple dimensions.

Aggregation Query: Query content of an MDX query on a certain aggregation level.

Aggregation Query Result: Query result which is organized in a specific form and obtained by MDX query on a certain aggregation level.

Dimension: Dimension in the MDX language concept, generally corresponds to a dimension table in a data source.

Hierarchy: Hierarchical structure in the MDX language concept, it may be composed of multiple layers. And

Level: Levels in the MDX language concept, generally corresponds to specific fields in the dimension table.

It needs to be explained that the steps shown in the flowchart of the accompanying drawing can be executed in a computer system such as a group of computer which can execute instructions; and although the logic sequence is shown in the flowchart, the shown or described steps can be executed in a sequence different from the sequence herein in some cases.

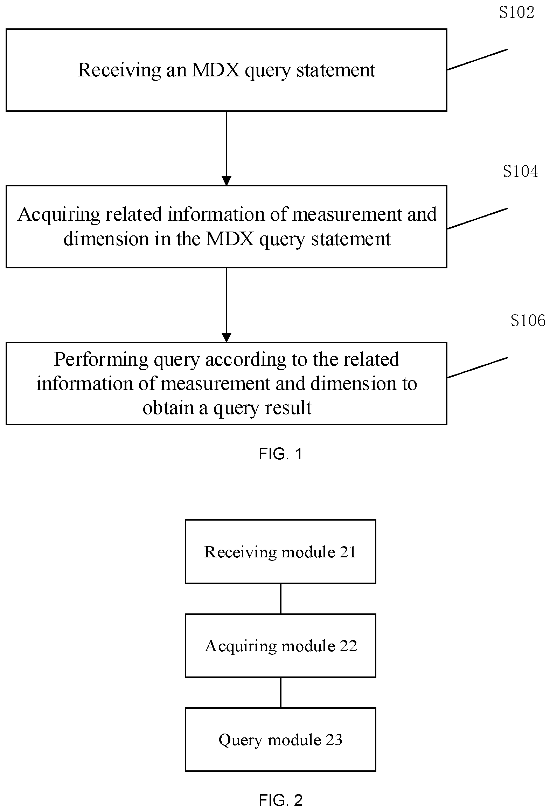

The present invention provides a data query method, as shown in the flowchart of the data query method in FIG. 1. The method comprises the following steps:
Step S102, receiving an MDX query statement, including receiving the MDX query statement sent by a report analysis tool.

Specifically, the steps include: analyzing the MDX query statement from various report analysis tools, extracting and organizing information for various queries and sending the information to a query execution module according to a mode of the report analysis tools organizing the MDX statement.

Exemplarily, the steps include: firstly, after receiving the MDX query statement sent by the report analysis tool, extracting a query intention of a user according to the statement: a dimension, a measurement and a screening condition which are required to be queried and a position (on multiple axes of a multi-dimensional data model) of the user; and due to that MDX query often needs data of multiple aggregation levels, and computing among multiple aggregation levels is independent of one another, generating multiple corresponding Aggregation Queries according to the extracted information, and sending the Aggregation Queries to the query execution module for parallel execution.

The report analysis tool for receiving includes but is not limited to Excel, Tableau and PowerBI.

Exemplarily, the query statement can be "querying the total sales volume of this quarter".

Step S104, acquiring related information of measurement and dimension in the MDX query statement.

Specifically, the related information of measurement and dimension includes but is not limited to one or more of the following: a measurement expression, a related operator in the measurement expression, a row dimension, a column dimension and dimension level information.

Exemplarily, when the query statement can be "querying the total sales volume of this quarter", the measurement can be the sales volume, and the dimension includes the store name and the date. A two-dimensional table can be established, the horizontal axis of the table is the store name, and the vertical axis of the table is the date. The sales volume of each store every day is the measurement.

Exemplarily, the query statement is "querying the average score of a student in a quarter", the measurement is the examination score, and the dimension includes the student name and the date.

Step S106, performing query according to related information of measurement and dimensions to obtain a query result.

The data can be stored in a distributed storage system. The distributed storage system is a unified whole, multiple batches of mutually isolated data are stored in the system, and a group of dimensions and measurements are stored in each batch of data. By adopting the distributed storage system, the data storage security and standby performance can be improved. Different measurement data can be stored in different batches of data.

According to the above-mentioned method of the present invention, the MDX expression is computed by extracting measurement and dimension information in query and through a distributed computing framework, and thus the data query and analysis efficiency is improved. The technical solution can cope with various business analysis scenes with large data volumes and complex logics.

In one embodiment, the steps of performing query according to the related information of measurement and dimension include:
determining a row dimension data range and a column dimension data range;
constructing a multi-dimensional data table according to the row dimension data range and the column dimension data range; and
for any coordinate node in the multi-dimensional data table,
querying and determining the measurement data of the node according to the row dimension and the column dimension of the coordinate node.

Specifically, although the display mode of the report tool on the data is a two-dimensional data table, the query statement refers to the query on the multi-dimensional data logically. For example, querying the sales volume of each store in each province every year refers to three dimensions of the city, the store ordinal number and the year and a measurement of the sales volume. It is supposed that the city and store ordinal number dimensions are placed on the row in report tool, the year dimension and the measurement are placed on the column, the display form in the report is shown in the Table 1.

**Table 1**

| Sales volume | | Year 1 | Year 2 | Year 3 |
|---|---|---|---|---|
| City 1 | Store 1 | xxx | xxx | xxx |
| | Store 2 | xxx | xxx | xxx |
| City 2 | Store 1 | xxx | xxx | xxx |
| | Store 2 | xxx | xxx | xxx |
| | Store 3 | xxx | xxx | xxx |

As shown in Table 1, the value of the sales volume is determined by three dimension values of the city, the store ordinal number and the year, the display form is the two-dimensional data table, but actually it is a three-dimensional data cube, and the axis x, the axis y and the axis z of the three dimensions correspond to the city, the store ordinal number and the year.

In one embodiment, the method further comprises the following steps: acquiring an operator of the MDX query statement;
1. for the coordinate node, an auxiliary dimension and/or an auxiliary measurement of the coordinate node is determined according to the row dimension, the column dimension and the measurement expression of the coordinate node if the measurement of the coordinate node cannot be queried;
   computing to obtain the measurement of the node according to the auxiliary dimension, and/or the auxiliary measurement and the operator.

Specifically, the expression includes the auxiliary dimension and/or the auxiliary measurement; and the auxiliary dimension and/or the auxiliary measurement to be used is determined according to the measurement expression. After the auxiliary dimension and/or measurement are/is obtained, the measurement value of the node is computed.

The measurement is divided into two types: basic measurement and computing measurement, wherein the basic measurement can be directly obtained from the batch of data of the distributed storage system, and the computing measurement is computed through dimension and/or measurement according to the expression. Therefore, the auxiliary dimension and the auxiliary measurement are needed:
Exemplarily, 1. it is assumed that two basic measurements of "sales volume" and "cost" exist, the computing measurement of "net profit" ("sales volume" - "cost") only depends on two auxiliary measurements;
2. it is assumed that the dimension "item number" value is in 1-20, there is an additional income fixed value of 10 from a "policy subsidy" besides the "sales volume" and the "cost" of the items 1-10 due to policy regulations, then the "net profit" at the moment is as follows.

```
 if ("item number" in 1-10)
 "Sales volume" - "cost" + 10
 else
 "Sales volume" - "cost"
 Then "net profit" depends on the auxiliary dimension ("item number") and auxiliary measures
 ("sales volume", "cost").
```

The policy regulations may be changed, so the judgment condition in the business scenario is generally written as a computing measurement separately, facilitating change. Therefore, there are actually two computing measurements herein:
1. Policy subsidy: if "item number" in 1-10;
2. Item net profit: if ("policy subsidy") then "sales volume" - "cost" + 10 else "sales volume" - "cost".

Then, for "policy subsidy", it only depends on the auxiliary dimension, and for "item net profit", it only depends on the auxiliary measurement. It depends on "policy subsidy", so it actually depends on the auxiliary dimension and auxiliary measurement.

Exemplarily, the query statement is "querying the profit of each quarter", the measurement expression is, sales volume - cost = profit, and the related operator refers to a subtraction operation.

The steps include: constructing the abstract syntax tree according to the measurement expression; traversing the abstract syntax tree; and for any node in the abstract syntax tree, computing the row dimension and the column dimension of the node by adopting the operator.

Specifically, the dimensions include a row dimension and a column dimension, thus the two-dimensional table can be designed, horizontal axis is the row dimension, and the vertical axis is the column dimension. The horizontal axis and vertical axis serve as basic data blocks.

Exemplarily, the sales volume of each store per day is a node in the abstract syntax tree. The node can be computed by adopting the operator.

In one embodiment, the method further comprises: acquiring the level information of the row dimension and column dimension in the MDX query statement;
Specifically, H = (L1, L2, L3);
Exemplarily, H = (year, month, day); L1 refers to year, L2 refers to month, and L3 refers to day. H is at the highest level, and single year, month, and day are at low level. In the priority ordering of a single dimension, the priority order from high to low level is: level of year, level of month, and level of day.

The step includes querying and acquiring corresponding data from the distributed data storage system according to the level information;
Exemplarily, the sales volume data of a certain day in a certain month in a certain year can be queried; the sales volume of a certain year, or the sales volume of a certain month, or the sales volume of a certain day can also be queried. For example, the sales volume on May 1, 2020 can be queried; the sales volume in May, including the sales volume in May of the past year can also be queried, such as the sales volume in May 2019 and the sales volume in May 2020. The sales volume on May 1, including the sales volume on May 1 for many years can be queried. A horizontal comparison can be performed to more intuitively judge the sales volume on May 1 in the past years, and the horizontal comparison can be performed on the sales volume to obtain the changing tendency.

The steps of traversing the abstract syntax tree include: for any node in the abstract syntax tree, querying the auxiliary measurement or the auxiliary dimension of the node if the direct measurement or dimension of the node cannot be queried; and
computing to obtain the direct measurement or dimension according to the auxiliary measurement and/or the auxiliary dimension.

Specifically, multiple batches of mutually isolated data are stored in the distributed system, and a group of dimensions and measurements are stored in each batch of data. For example, the measurement 1 can be stored in the batch 1 of data, and the measurement 1 refers to the sales volume. The measurement 2 can be stored in the batch 2 of data, and the measurement 2 refers to the cost.

Exemplarily, if the profit of a certain day is to be computed, but the direct profit cannot be queried and needs to be computed, the sales volume is needed to be obtained first, and then the cost, and the cost is subtracted from the sales volume to obtain the profit. The sales volume and the cost are both measurements.

The report tool has requirement on the format, so only specific formats can be recognized by the report tool. In one embodiment, the method comprises the steps of performing format finishing on the query result; finishing the format into a format that can be recognized by the report tool; sending the query result subjected to format finishing to the report tool.

Specifically, a final return result is constructed from multiple Aggregation Query Results. The steps specifically include: acquiring information of dimension and measurement on row and column from different Aggregation Queries to determine a framework (distribution of dimension and measurement on row and column) of the MDX query result, extracting dimension values and corresponding measurement values on row and column from each data unit of the data block returned by the query execution module, and then returning extraction results of different Aggregation Queries to the report analysis tool in a specific format according to a high-low relationship organization of the aggregation level.

In one embodiment, the step of performing query according to the related information of measurement and dimension to obtain the query result includes:
performing query from a distributed storage system according to the related information of measurement and dimension to obtain the query result;
Multiple batches of mutually isolated data are stored in the distributed storage system, and a group of dimensions and measurements are stored in each batch of data.

In one embodiment, the steps of querying the auxiliary dimension and/or the auxiliary measurement of the node if the direct measurement of the node cannot be queried include: determining the auxiliary dimension and/or the auxiliary measurement to be used according to the measurement expression;
determining the batch of data of the auxiliary dimension and/or the auxiliary measurement
according to the auxiliary dimension and/or the auxiliary measurement; and
acquiring the auxiliary dimension and/or the auxiliary measurement from the batch of data.

The steps specifically include: pre-storing the corresponding relationship between the batch of data and the stored auxiliary dimension and/or the auxiliary measurement; and determining a corresponding batch of data according to the corresponding relationship so as to further obtain specific dimension and measurement values.

Exemplarily, the measurement is the sales volume, and the pre-stored relationship is that the sales volume is stored in the batch 4 of data, and the sales volume is obtained from the batch 4 of data.

The present invention provides a higher-performance MDX execution engine solution, the execution speed of MDX query under a large data volume is greatly increased, and the overall performance of query is improved; the distributed storage system is provided to dock with the solution, so the user can process a larger scale of data volume through the distributed storage system; and a distributed computing solution is provided, so the user can flexibly adjust resource allocation according to actual requirements, and as a result, the flexibility of the system and the use cost of the user are greatly improved.

In a second aspect, the present invention further provides a data processing device, as shown in FIG. 2, comprising:
a receiving module 21 which is used for receiving the MDX query statement;
an acquiring module 22 which is used for acquiring related information of measurement and dimension in the MDX query statement; and
a query module 23 which is used for performing query according to the related information of measurement and dimension to obtain a query result.

In one embodiment, the query module 23 is further used for determining a row dimension data range and a column dimension data range;
constructing a multi-dimensional data table according to the row dimension data range and the column dimension data range; and
for any coordinate node in the multi-dimensional data table,
querying and determining the measurement data of the node according to the row dimension and the column dimension of the coordinate node.

In one embodiment, the query module 23 is further used for acquiring an operator of the MDX query statement; and
for the coordinate node, determining the auxiliary dimension and/or the auxiliary measurement of the coordinate node according to the row dimension, the column dimension and the measurement expression of the coordinate node if the measurement of the coordinate node cannot be queried;
computing to obtain the measurement of the node according to the auxiliary dimension, and/or the auxiliary measurement and the operator.

In one embodiment, the receiving module 21 is further used for receiving the MDX query statement sent by the report tool;
The device further comprises a format finishing module used for performing format finishing on the query result, and sending the query result subjected to format finishing to the report tool.

In one embodiment, the query module 23 is further used for performing query from the distributed storage system according to the related information of measurement and dimension to obtain the query result;
Multiple batches of mutually isolated data are stored in the distributed storage system, and a group of dimensions and measurements are stored in each batch of data.

In one embodiment, the query module 23 is further used for determining the auxiliary dimension and/or the auxiliary measurement to be used according to the measurement expression.
determining the batch of data of the auxiliary dimension and/or the auxiliary measurement according to the information of the auxiliary dimension and/or the auxiliary measurement; acquiring the auxiliary dimension and/or the auxiliary measurement from the batch of data.

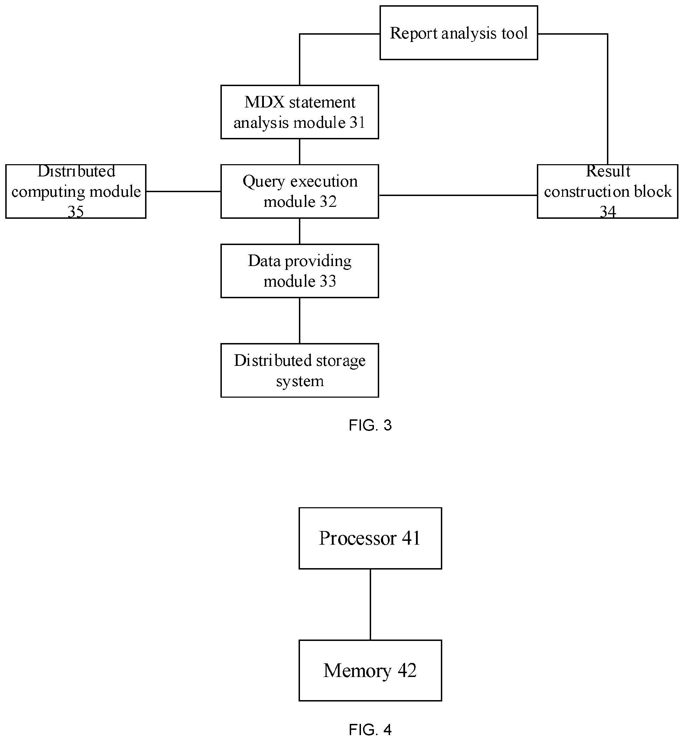

Another data query device is introduced in detail below, as shown in the structural schematic diagram of the other data query device in FIG. 3. The device comprises an MDX statement analysis module 31, a query execution module 32, a data providing module 33, a result construction module 34 and a distributed computing module 35.

The four modules are specifically introduced by combining a simple sample query, taking an MDX query referring to query of a single dimension and a single computing measurement as an example: select [D].[H].members from [Catalog] where ([Measures].[M]), wherein D and H respectively represent MDX dimension (Dimension) and the hierarchy (Hierarchy); it is assumed that H only has two levels (Level): L1 and L2 respectively represents the sum and the detail; and M represents a computing measurement.

The MDX statement analysis module 31 is used for analyzing the MDX query statement from various report analysis tools, extracting and organizing information for various queries and sending the information to the query execution module according to the mode of the report analysis tools organizing the MDX statement.

The steps include: firstly, after receiving the MDX query statement sent by the report analysis tool, extracting the query intention of the user according to the statement: the dimension, the measurement and the screening condition which are required to be queried and a position (on multiple axes of the multi-dimensional data model) of the user; and due to that MDX query often needs data of multiple aggregation levels, and computing among multiple aggregation levels is independent of one another, generating multiple corresponding Aggregation Queries according to the extracted information, and sending the Aggregation Queries to the query execution module for parallel execution.

As the report analysis tool has a certain rule when organizing the query statement, according to the statement mode and semantic analysis, it can be known that the sample query includes data on two aggregation levels of sum and details under the hierarchy H, therefore, two Aggregation Queries are converted, L1 and M, and L2 and M are computed respectively, and parallel execution is carried out.

The query execution module 32 is used for converting the Aggregation Query into the distributed execution plan, submitting the distributed execution plan to the distributed computing module 35, receiving the computing result sent by the distributed computing module 35 and finally returning the result to the result construction module 34.

After queries of different aggregation levels are obtained from the MDX statement analysis module, elements on corresponding row and column axes of the basic data blocks are firstly constructed according to included row dimension information and the screening information on these dimensions; and then the abstract syntax tree of the measurement expression are traversed and queried, different types of nodes are mapped into different distributed operators through a certain rule, and adding, reducing, computing, modifying and other operations are performed on the basic data block, thereby achieving the purpose of gradually analyzing and executing the abstract syntax tree of the measurement expression. Then, the data block finally containing the whole aggregation level query result is converted into the Aggregation Query Result and returned to the result construction module.

By corresponding to the sample query, the dimension data of the level (L1 or L2) of H included is queried firstly by each Aggregation Query, and the dimension data are constructed into a basic data block, and then an abstract syntax tree of M computing measurement is traversed; for different algorithms and different functions involved in the query statement, adding, reducing, computing, modifying and other operations (if data needs to be added, query needs to be carried out through the data providing module) are performed by a distributed operator according to the semantics of the query statement on the basic data block by taking columns as units, and finally data contents corresponding to M are added on the basic data block. For the finally computed data block, data results of L1 and L2 and data results of M on L1 and L2 are extracted according to the position information of levels and measurement in the Aggregation Query, and the data results are converted into an Aggregation Query Result data structure and forwarded to the result construction module.

The data providing module 33 is used for receiving dimension and measurement requests sent by the query execution module 32, further adjusting the ranges of the requested dimension and measurement according to a specific rule, initiating the query to the distributed data storage service, packaging the obtained dimension and measurement results, and returning the packaged dimension and measurement data block to the query execution module 32.

By corresponding to the above sample query, firstly, when constructing the initial data block, a proper query needs to be organized according to the level information used on the row and column in the query, and corresponding data is obtained from the distributed data storage system. Secondly, in the process of traversing the abstract syntax tree of M, if additional data is needed, and the computing measurement depends on other basic measurement or dimension, the query is organized to obtain data according to the needed dimension and measurement information, and the data is returned to the execution module.

The result construction module 34 is used for constructing the final return result from multiple Aggregation Query Results. The step specifically includes: acquiring information of dimension and measurement on row and column from different Aggregation Queries to determine a framework (distribution of dimension and measurement on row and column) of the MDX query result, extracting dimension values and corresponding measurement values on row and column from each data unit of the data block returned by the query execution module, and then returning extraction results of different Aggregation Queries to the report analysis tool in a specific format according to a high-low relationship organization of the aggregation level.

The distributed computing module 35 is used for performing the distributed computing plan and sending the computing result to the query execution module.

In a third aspect, the present invention provides data query equipment, as shown in the structural schematic diagram of the data query equipment in FIG. 4, comprising at least one processor 41 and at least one memory 42, wherein the memory 42 is used for storing one or more program instructions; and the processor 41 is used for running one or more program instructions and executing any of the abovementioned methods.

In a fourth aspect, the present invention further provides a computer readable storage medium, comprising one or more program instructions, and the one or more program instructions are used for executing any of the abovementioned methods.

Various methods, steps and logic block diagrams disclosed in the embodiment of the present invention can be realized or executed. The general processor can be a microprocessor or any conventional processor and the like. The steps of the method disclosed by the embodiment of the present invention can be directly executed by a hardware decoding processor or executed by the combination of hardware and software modules in the decoding processor. The software module can be located in a random access memory, a flash memory, a read-only memory, a programmable read-only memory or an electrically erasable programmable memory, a register and other mature storage medium in the field. The processor is used for reading the information in the storage medium and completing the steps of the method in combination with the hardware.

The storage medium can be a memory, for example, the storage medium can be a volatile memory or a nonvolatile memory, or can include both the volatile memory and the nonvolatile memory.

The non-volatile memory can be Read-Only Memory (ROM), Programmable ROM (PROM), Erasable PROM (EPROM), Electrically EPROM (EEPROM) or flash memory.

The volatile Memory can be a Random Access Memory (RAM) and is used as an external cache. By way of example but not limitation, RAM of many forms can be used, such as Static RAM (SRAM), Dynamic RAM (DRAM), Synchronous DRAM (SDRAM), Double Data Rate SDRAM (DDRSDRAM), Enhanced SDRAM (ESDRAM), Synchlink DRAM (SLDRAM) and Direct Rambus RAM (DRRAM).

The storage medium described in the embodiments of the present invention is intended to include, but not limited to, these and any other suitable types of memories.

Those skilled in the art should appreciate that, in one or more of the above embodiments, the functions described in the present invention can be implemented by a combination of hardware and software. When the software is applied, the corresponding functions can be stored in the computer-readable medium or treated as one or more instructions or codes on the computer-readable medium for transmitting. The computer-readable medium includes a computer storage medium and a communication medium, and the communication medium includes any medium through which the computer program is conveniently transferred from one place to another. The storage medium can be any available medium which can be accessed by a general purpose or special purpose computer.

The above descriptions are only preferred embodiments of the present invention, but are not intended to limit the present invention. For those skilled in the art, the present invention may have various modifications and changes. Any modification, equivalent replacement, improvement and the like made within the spirit and principle of this application shall be included within the protection scope of this application.

## Claims

1. A data query method, comprising the following steps:
receiving an MDX query statement;
acquiring related information of measurement and dimension in the MDX query statement; and
performing query according to the related information of measurement and dimension to obtain a query result.

2. The data query method according to claim 1, wherein the steps of performing query according to the related information of measurement and dimension include:
determining a row dimension data range and a column dimension data range;
constructing a multi-dimensional data table according to the row dimension data range and
the column dimension data range; and
for any coordinate node in the multi-dimensional data table,
querying and determining the measurement data of the node according to the row dimension and the column dimension of the coordinate node.

3. The data query method according to claim 2, wherein the method further comprises the following steps:
constructing an abstract syntax tree according to a measurement expression;
traversing the abstract syntax tree; and
for any node in the abstract syntax tree, computing the row dimension and the column dimension of the node by adopting an operator.

4. The data query method according to claim 2, wherein the method further comprises the following steps:
acquiring an operator of the MDX query statement;
for the coordinate node, determining an auxiliary dimension and/or an auxiliary measurement of the node according to the row dimension, the column dimension and the measurement expression of the coordinate node if the measurement of the coordinate node cannot be queried; and
computing to obtain the measurement of the node according to the auxiliary dimension,
and/or the auxiliary measurement and the operator.

5. The data query method according to claim 1, wherein the steps of receiving the MDX query statement include: receiving the MDX query statement sent by a report tool; performing format finishing on the query result; and sending the query result subjected to format finishing to the report tool.

6. The data query method according to claim 4, wherein the step of performing query according to the related information of measurement and dimension to obtain the query result includes:
performing query from a distributed storage system according to the related information of measurement and dimension to obtain the query result;
multiple batches of mutually isolated data are stored in the distributed storage system; and
a group of dimensions and measurements are stored in each batch of data.

7. The data query method according to claim 6, wherein the steps of querying the auxiliary dimension and/or the auxiliary measurement of the node if the direct measurement of the node cannot be queried include:
determining the auxiliary dimension and/or the auxiliary measurement to be used according to the measurement expression;
determining the batch of data of the auxiliary dimension and/or the auxiliary measurement according to the auxiliary dimension and/or the auxiliary measurement; and
acquiring the auxiliary dimension and/or the auxiliary measurement from the batch of data.

8. A data query device, comprising
a receiving module used for receiving the MDX query statement;
an acquiring module used for acquiring related information of measurement and dimension in the MDX query statement; and
a query module used for performing query according to the related information of measurement and dimension to obtain the query result.

9. The data query device according to claim 8, wherein the query module is further used for determining a row dimension data range and a column dimension data range;
constructing a multi-dimensional data table according to the row dimension data range and the column dimension data range; and
for any coordinate node in the multi-dimensional data table,
querying and determining the measurement data of the node according to the row dimension and the column dimension of the coordinate node.

10. A data query device, comprising:
an MDX statement analysis module which is used for analyzing the MDX query statement from various report analysis tools, extracting and organizing information for various queries and sending the information to a query execution module according to a mode of the report analysis tools organizing the MDX statement;
the query execution module which is used for converting an Aggregation Query into a distributed execution plan, submitting the distributed execution plan to a distributed computing module, receiving a computing result sent by the distributed computing module and finally returning the result to a result construction module;
a data providing module which is used for receiving a dimension and measurement requests sent by the query execution module, further adjusting the requested dimension and measurement ranges according to a specific rule, initiating a query to a distributed data storage service, packaging the obtained dimension and measurement results, and returning the packaged dimension and measurement data block to the query execution module;
the result construction module which is used for constructing a final return result from multiple Aggregation Query Results; and
the distributed computing module which is used for performing the distributed computing plan and sending the computing result to the query execution module.

11. A kind of data query equipment, comprising at least one processor and at least one memory, wherein the memory is used for storing one or more program instructions; and the processor is used for running one or more program instructions to execute the method according to any of claims 1-7.

12. A computer readable storage medium, comprising one or more program instructions, wherein the one or more program instructions are used for executing the method according to any of claims 1-7.
